# EUROPÄISCHE PATENTSCHRIFT

(11) **EP 2 821 150 B1**
(45) Veröffentlichungstag und Bekanntmachung des Hinweises auf die Patenterteilung: **28.09.2016**
(21) Anmeldenummer: 14175355.8
(22) Anmeldetag: 02.07.2014
(51) Int. Cl.: B08B 9/20, B08B 9/42, B65G 47/42

(54) **Vorrichtung zur Überwachung des Leerzustandes einer Behälterzelle einer Behälterreinigungsmaschine**
Device for monitoring the empty condition of a container cell of a container-cleaning machine
Dispositif de surveillance de l'état de vide d'une cellule de récipient d'une machine de nettoyage de récipients

(30) Priorität: 02.07.2013 DE 102013106935
(43) Veröffentlichungstag der Anmeldung: 07.01.2015
(73) Patentinhaber: Krones AG, 93073 Neutraubling (DE)
(72) Erfinder: Winkel, Matthias, 93073 Neutraubling (DE)
(74) Vertreter: Nordmeyer, Philipp Werner

(56) Entgegenhaltungen:
- DE-A1- 2 113 949
- DE-A1- 3 314 627
- DE-A1- 3 725 953
- US-A- 4 165 756

## Beschreibung

### Technisches Gebiet

Die vorliegende Erfindung betrifft eine Vorrichtung zur Überwachung des Leerzustandes einer Behälterzelle einer Behälterreinigungsmaschine, bevorzugt einer Behälterreinigungsmaschine zur Reinigung von Mehrwegflaschen in einer Getränkeabfüllanlage.

### Stand der Technik

Vorrichtungen zur Reinigung von Behältern und bevorzugt zur Reinigung von Mehrwegflaschen in Getränkeabfüllanlagen sind wohlbekannt. Hierbei durchlaufen die jeweiligen zu reinigenden Mehrwegflaschen in einer Behälterreinigungsmaschine unterschiedliche Behandlungsstationen, in welchen sie entleert, ausgespritzt, getaucht, mit Reinigungsmitteln wie beispielsweise einer Reinigungslauge behandelt und/oder mit klarem Wasser nachgespült werden. Dabei sind unterschiedliche Verfahren zur Reinigung von Mehrwegflaschen bekannt.

Um die jeweils zu reinigenden Behälter und insbesondere die Mehrwegflaschen auf ihrem Weg durch die Behälterreinigungsmaschine zu führen, ist es bekannt, die Behälter jeweils in so genannte Behälterzellen einzuschieben, innerhalb welchen sie dann durch die Behälterreinigungsmaschine hindurch transportiert werden. In einer Behälterreinigungsmaschine sind üblicherweise mehrere Behälterzellen nebeneinander angeordnet, welche entsprechend senkrecht zur Transportrichtung ausgerichtete Behälterzellenreihen ausbilden. Üblicherweise ist eine Vielzahl solcher Reihen hintereinander in Transportrichtung angeordnet, beispielsweise an Transportketten oder Transportbändern montiert, um entsprechend ein quasi kontinuierliches Transportieren eines zu behandelnden Behälterstromes zu ermöglichen. Auch taktweise transportierende Behälterreinigungsmaschinen sind bekannt. Die hintereinander in Transportrichtung angeordneten Behälterzellen bilden entsprechend Behälterzellenspalten aus.

Die einzelnen Behälterzellen sind jeweils für die Aufnahme eines einzelnen Behälters ausgebildet und sind dazu üblicherweise mit an den zu behandelnden Behältertyp angepassten Behälterzelleneinsätzen versehen. Die Behälterzelleneinsätze sind üblicherweise aus einem Kunststoffmaterial ausgebildet und sorgen dafür, dass die eingebrachten und zu behandelnden Behälter nur ein vorgegebenes Spiel innerhalb der jeweiligen Behälterzelle aufweisen. Weiterhin sorgen sie für eine definierte Anordnung der Behälteröffnung derart, dass beispielsweise ein Ausspritzen mit gezielt ausgerichteten und/oder nachgeführten Spritzdüsen ermöglicht wird.

Die Behälterzelleneinsätze können entsprechend so ausgebildet sein, dass Behälter mit unterschiedlichen Abmessungen sicher durch die Behälterreinigungsmaschine hindurch geführt werden können und insbesondere so in den jeweiligen Behälterzellen angeordnet werden können, dass sich der Mündungsbereich beziehungsweise die Mündung des Behälters in einer definierten Position befindet.

Die Behälterzelleneinsätze werden üblicherweise in die Behälterzellen beziehungsweise die Behälterzellenkörper eingeschoben und dort verklemmt oder verrastet. Die Behälterzelleneinsätze weisen dabei üblicherweise eine solche Form auf, welche ein Einschieben der zu behandelnden Behälter mit der Mündung voraus in die jeweilige Behälterzelle ermöglicht, und welche dann eine Begrenzung der Einschubtiefe für die jeweiligen Behälter definieren. Mit anderen Worten würde ohne den Behälterzelleneinsatz ein in eine Behälterzelle eingeschobener Behälter durch diesen hindurch beziehungsweise wieder aus dieser heraus rutschen können. Entsprechend ist es von Bedeutung, vor dem Einschieben der Behälter in die jeweiligen Behälterzellen zu überprüfen, ob jede Behälterzelle mit einem Behälterzelleneinsatz versehen ist, um ein nachfolgendes Kollidieren eines möglicherweise durchgerutschten Behälters mit Anlagenbestandteilen der Behälterreinigungsmaschine zu verhindern und entsprechend Betriebsunterbrechungen zu vermeiden.

Aus dem Stand der Technik ist es weiterhin bekannt, die Behälterzellen daraufhin zu kontrollieren, ob sie vor dem Einschieben eines neuen Behälters vollständig leer sind, um zu vermeiden, dass eine Betriebsstörung auftritt, wenn ein Behälter in eine Behälterzelle eingeschoben wird, in welcher bereits ein Behälter oder ein Fremdkörper aufgenommen ist.

Hierzu offenbart beispielsweise die DE 29 02 596 C2 eine Vorrichtung zum Abtasten von Leerzellen, bei welcher Kontrollfinger in die Aufnahmezellen eingeführt werden und bei Auftreten eines Widerstandes die Anlage gestoppt wird.

Aus der DE 195 24 350 A1 ist eine Vorrichtung zur Ermittlung des Leerzustandes von Aufnahmezellen für Gefäße an Gefäßreinigungsmaschinen bekannt, bei welcher mittels einer Lichtschranke überprüft wird, ob in der jeweiligen Flaschenzelle noch eine Flasche vorliegt oder darin Flaschenbestandteile verklemmt sind.

Auch aus der DE 31 31 863 C2 ist eine entsprechende Vorrichtung zum Abtasten von Leerzellen bekannt, bei welcher ebenfalls über einen Tastfinger der Leerzustand der Leerzellen ermittelt wird.

Aus der DE 21 13 949 ist eine Vorrichtung in Behälterreinigungsmaschinen zur Beseitigung von Fremdkörpern aus den Mundstücköffnungen von Flaschenzellen bekannt, bei welcher mittels eines in die Flaschenzelle einführbaren Dornes dort eventuell vorliegende Behälter beziehungsweise Behälterreste ausgestoßen werden.

Die US 4,165,756 A beschreibt einen Waschtunnel zum Reinigen von Glasbehältern. Der Waschtunnel weist Taschen zur Aufnahme der Glasbehälter und eine mechanische Scaneinrichtung auf, welche die Taschen auf darin verbliebene Glaskörper prüft und die Position der Taschen überwacht.

### Darstellung der Erfindung

Ausgehend von dem bekannten Stand der Technik ist es eine Aufgabe der vorliegenden Erfindung, eine Vorrichtung zur Überwachung des Leerzustandes einer Behälterzelle einer Behälterreinigungsmaschine anzugeben, welche einen noch zuverlässigeren Betrieb einer Behälterreinigungsmaschine ermöglicht.

Diese Aufgabe wird durch eine Vorrichtung zur Überwachung des Leerzustandes einer Behälterzelle einer Behälterreinigungsmaschine mit den Merkmalen des Anspruchs 1 gelöst. Vorteilhafte Weiterbildungen ergeben sich aus den Unteransprüchen.

Entsprechend wird eine Vorrichtung zur Überwachung des Leerzustandes einer Behälterzelle einer Behälterreinigungsmaschine, bevorzugt einer Behälterreinigungsmaschine zur Reinigung von Mehrwegflaschen in einer Getränkeabfüllanlage, umfassend mindestens eine Fremdkörperausstoßvorrichtung zum Ausstoßen eines in der Behälterzelle vorliegenden Fremdkörpers aus der Behälterzelle, vorgeschlagen. Erfindungsgemäß ist eine Kontrollvorrichtung zur Überprüfung der Integrität der Behälterzelle vorgesehen. Dazu weist die Kontrollvorrichtung einen Tastbereich zum Abtasten der Behälterzelle zur Ermittlung, ob ein Behälterzelleneinsatz vorhanden ist, und einen Auslösebereich zum Auslösen eines Sensors auf.

Dadurch, dass die Vorrichtung neben einer Fremdkörperausstoßvorrichtung zum Ausstoßen eines fehlerhaft in einer Behälterzelle aufgenommenen Behälters oder eines anderen Fremdkörpers aus der Behälterzelle auch noch eine Kontrollvorrichtung zum Überprüfen der Integrität der Behälterzelle aufweist, ist es möglich, an einer einzigen Maschinenposition sicher zu stellen, dass die jeweilige Behälterzelle, in welche nachfolgend ein zu behandelnder Behälter eingeschoben werden soll, zur Aufnahme eines zu behandelnden Behälters geeignet ist und damit das Auftreten einer Betriebsstörung unwahrscheinlich ist.

So kann sichergestellt werden, dass ein erneutes Einschieben eines zu behandelnden Behälters in eine noch mit einem darin eventuell verklemmtem Behälter oder einer darin verklemmten Scherbe belegten Behälterzelle vermieden wird. Entsprechend kann verhindert werden, dass eine Kollision eines in die Behälterzelle einzuschiebenden Behälters und einem Fremdkörper in der Behälterzelle auftritt.

Weiterhin kann durch die Überprüfung der Integrität der Behälterzelle und insbesondere des Vorliegens eines Behälterzelleneinsatzes sichergestellt werden, dass ein in die Behälterzelle einzuschiebender Behälter tatsächlich in der Behälterzelle gehalten wird und beim weiteren Durchlaufen der Behälterreinigungsmaschine nicht aus der Behälterzelle herausfällt.

Besonders bevorzugt bilden die Kontrollvorrichtung und die Fremdkörperausstoßvorrichtung eine gemeinsame Baugruppe aus. Auf diese Weise kann der benötigte Bauraum innerhalb der Behälterreinigungsmaschine verringert werden, wodurch diese kompakter ausgebildet werden kann. Zum anderen wird die Montage der Baugruppe umfassend die Fremdkörperausstoßvorrichtung und die Kontrollvorrichtung vereinfacht, da beim Aufbau beziehungsweise bei der Wartung der Reinigungsmaschine lediglich diese eine Baugruppe ausgetauscht beziehungsweise montiert werden muss. So lassen sich Stillstandszeiten verringern.

Bevorzugt ist die Kontrollvorrichtung mit einem Träger der Fremdkörperausstoßvorrichtung verbunden. Besonders bevorzugt ist dann eine Verschwenkachse der Kontrollvorrichtung an dem Träger der Fremdkörperausstoßvorrichtung angeordnet. Auf diese Weise kann ein besonders kompaktes Baumaß erreicht werden, da sowohl die Fremdkörperausstoßvorrichtung als auch die Kontrollvorrichtung im Wesentlichen in der gleichen Position in der Behälterreinigungsmaschine montierbar sind.

Bevorzugt sind die Kontrollvorrichtung und die Fremdkörperausstoßvorrichtung in Transportrichtung der Behälterzelle hintereinander angeordnet, wobei besonders bevorzugt zunächst die Fremdkörperausstoßvorrichtung und dann die Kontrollvorrichtung mit der Behälterzelle in Wechselwirkung tritt. Auf diese Weise lässt sich erreichen, dass die Integrität der jeweiligen Behälterzelle erst nach Durchlaufen der Fremdkörperausstoßvorrichtung überprüft wird und entsprechend eine mögliche Beschädigung der Behälterzelle beziehungsweise eines Behälterzelleneinsatzes durch die Fremdkörperausstoßvorrichtung selbst gleich miterfasst werden kann. Beispielsweise kann es vorkommen, dass bei einer hartnäckigen Verklemmung einer Scherbe in einem Behälterzelleneinsatz die Fremdkörperausstoßvorrichtung den gesamten Behälterzelleneinsatz aus der Behälterzelle herausreißt. Durch die entsprechende Anordnung des Tastbereichs der Kontrollvorrichtung in einer Position nach der Fremdkörperausstoßvorrichtung kann eine solche Beschädigung und die darauf folgende fehlende Integrität der Behälterzelle ermittelt werden.

Bevorzugt ist dabei die Kontrollvorrichtung um eine zwischen dem Tastbereich und dem Auslösebereich angeordnete Verschwenkachse herum verschwenkbar an der Fremdkörperausstoßvorrichtung gehalten. Die Sicherheit beim Abtasten der Integrität der Behälterzelle sowie das Sicherstellen, dass die Fremdkörperausstoßvorrichtung sämtliche Fremdkörper aus der Behälterzelle ausgestoßen hat, lässt sich auf diese Weise gut verbinden, derart, dass eine effiziente und sichere Überwachung der jeweiligen Behälterzelle erreicht wird, ohne das die Gesamtvorrichtung zu komplex werden würde. Insbesondere in der die Bauteile besonders beanspruchenden Atmosphäre innerhalb einer Behälterreinigungsmaschine ist es von Vorteil, sowohl die Kontrollvorrichtung als auch die Fremdkörperausstoßvorrichtung möglichst resistent gegenüber etwaiger Korrosion auszubilden.

Mechanisch einfache Baugruppen lassen sich auch dadurch bevorzugt erreichen, dass die Fremdkörperausstoßvorrichtung einen Ausstoßbereich und einen Träger aufweist, wobei die Kontrollvorrichtung am Träger der Fremdkörperausstoßvorrichtung angeordnet ist. Besonders bevorzugt weist die Fremdkörperausstoßvorrichtung einen Ausstoßbereich und einen starr mit diesem verbundenen Träger auf und der Träger ist in Ausstoßrichtung vorgespannt.

In einer weiteren vorteilhaften Weiterbildung ist die Baugruppe aus Kontrollvorrichtung und Fremdkörperausstoßvorrichtung an einem sich quer zur Transportrichtung der Behälterzelle erstreckenden Trägerbalken gehalten. Bevorzugt sind dabei entlang des Trägerbalkens eine Mehrzahl von Baugruppen angeordnet sind, bevorzugt je Behälterzellenspalte eine Baugruppe, um sämtliche Behälterzellenspalten überwachen zu können.

Um eine mechanisch einfache und zuverlässige Ausbildung der Baugruppen zu erreichen, ist der Trägerbalken bevorzugt um eine sich senkrecht zur Transportrichtung der Behälterzelle erstreckende Verschwenkachse herum verschwenkbar und in Ausstoßrichtung der Fremdkörperausstoßvorrichtung vorgespannt. So kann beim Auftreten einer Verklemmung eines Ausstoßbereiches einer der am Trägerbalken angeordneten Fremdkörperausstoßvorrichtungen entsprechend eine Zerstörung der Behälterzelle, der Fremdkörperausstoßvorrichtung oder anderer Anlagenbereiche vermieden werden, da der Ausstoßbereich entgegen der Vorspannung ausweichen kann. In einem solchen Fall werden zwar die anderen Behälterzellen dieser Behälterzellenreihe nicht abgetastet, aber eine Beschädigung durch die Fremdkörperausstoßvorrichtung wird vermieden.

Bevorzugt wird dabei eine gemeinsame Sensorvorrichtung für mindestens zwei, bevorzugt für alle sich entlang des Trägerbalkens erstreckenden Kontrollvorrichtungen vorgesehen. So kann effizient und mit nur einem einzigen Sensor die gesamte Behälterzellenreihe überwacht werden. Dabei ist eine positionsgenaue Überwachung nicht gegeben. Da beim Auftreten einer nicht integeren Behälterzelle jedoch üblicherweise die gesamte Behälterreinigungsmaschine angehalten wird und ein Bediener mittels einer Sichtprüfung gleich die defekte Behälterzelle finden kann, muss dies nicht als Nachteil angesehen werden, führt aber zu einem einfachen Aufbau der Vorrichtung. Die Sensorvorrichtung kann dabei besonders bevorzugt in Form einer Lichtschranke, eines mechanisch auslenkbaren Sensorseiles, welches bei Auslenkung einen Schalter betätigt, und/oder als elektrisch kontaktierbares Sensorseil vorgesehen sein.

Besonders bevorzugt ist ein sich quer zur Transportrichtung erstreckender Trägerbalken vorgesehen, an welchem ein Träger der Fremdkörperausstoßvorrichtung fest montiert ist. Die jeweilige Fremdkörperausstoßvorrichtung kann so durch die nebeneinander in den Behälterzellenreihen liegenden Behälterzellen hindurchstreifen beziehungsweise mit ihrem Ausstoßbereich so eingreifen, dass ein Ausstoßen von sich in den Behälterzellen verklemmten Fremdkörpern und insbesondere in den Behälterzellen verklemmten Behältern beziehungsweise Behälterscherben erreicht werden kann. Über die Montage an einem gemeinsamen Trägerbalken lässt sich wiederum eine besonders einfache Ausbildung der Fremdkörperausstoßvorrichtung erreichen, welche deutlich weniger komplex ist, als die aus dem Stand der Technik bekannten, jeweils separat in die einzelnen Behälterzellen einzuführenden Taster beziehungsweise Ausstoßkolben.

Besonders bevorzugt ist der Trägerbalken rotierbar angeordnet und in die Ausstoßrichtung vorgespannt, so dass der Ausstoßbereich der Fremdkörperausstoßvorrichtung in die Ausstoßrichtung vorgespannt ist. Beim Vorliegen eines zu hohen Widerstandes an einer individuellen Fremdkörperausstoßvorrichtung kann diese jedoch über den den zu hohen Widerstand verursachenden Fremdkörper hinweg ausgelenkt werden, ohne dass die Behälterzelle, die Fremdkörperausstoßvorrichtung oder der Trägerbalken beschädigt werden würden.

Bevorzugt ist der Trägerbalken mittels einer Feder oder eines Elastomers in die Ausstoßrichtung vorgespannt.

### Kurze Beschreibung der Figuren

Bevorzugte weitere Ausführungsformen und Aspekte der vorliegenden Erfindung werden durch die nachfolgende Beschreibung der Figur näher erläutert. Dabei zeigt:

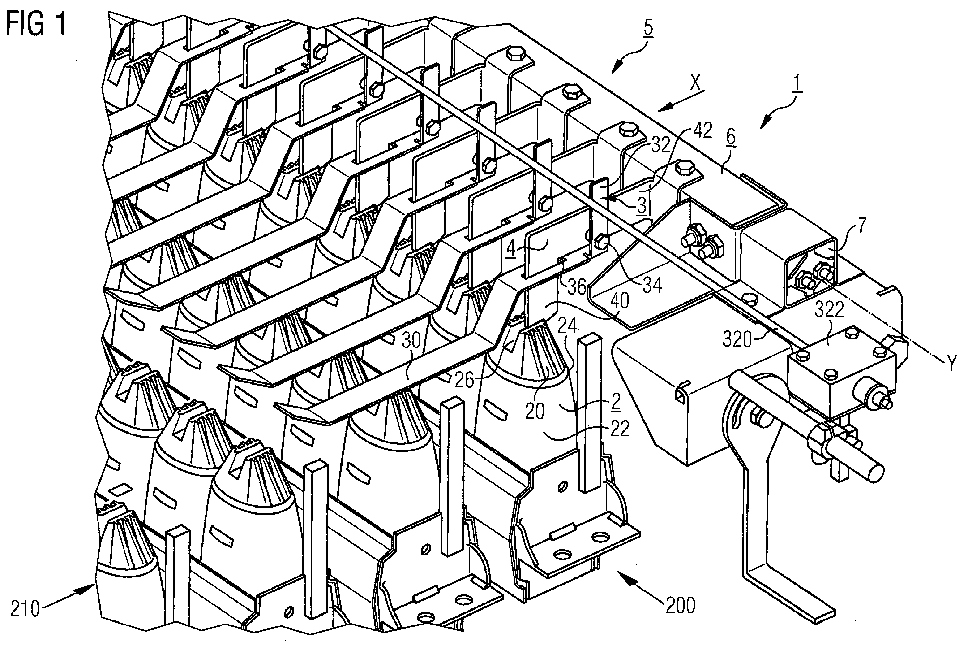

- Figur 1: eine schematische, perspektivische Darstellung einer Vorrichtung zur Reinigung von Behältern.

### Detaillierte Beschreibung bevorzugter Ausführungsbeispiele

Im Folgenden werden bevorzugte Ausführungsbeispiele anhand der Figur beschrieben.

In Figur 1 ist eine schematische, perspektivische Darstellung einer Vorrichtung 1 zur Überwachung des Leerzustandes einer Behälterzelle 2 einer Behälterreinigungsmaschine zur Reinigung von in der Figur nicht gezeigten Behältern.

Eine Vielzahl von Behälterzellen 2 ist vorgesehen, welche zur Aufnahme der zu behandelnden beziehungsweise zu reinigenden Behälter dienen. Die Behälterzellen 2 umfassen jeweils einen Behälterzelleneinsatz 20, welcher in Figur 1 am oberen Ende der jeweiligen Behälterzellen 2 gezeigt ist, und welcher eine zuverlässige Führung des in die jeweilige Behälterzelle 2 eingeschobenen Behälters ermöglicht. Die Behälterzelle 2 wird entsprechend durch den Behälterzelleneinsatz 20 beispielsweise an unterschiedliche Behälterdimensionen, insbesondere unterschiedliche Behälterhöhen und/oder unterschiedliche Behälterdurchmesser, so angepasst, dass ein in der Behälterzelle 2 aufgenommener zu behandelnder Behälter eine im Wesentlichen definierte Position innerhalb der Behälterzelle 2 einnimmt. Auf diese Weise kann sichergestellt werden, dass eine Behältermündung des zu behandelnden Behälters in einer definierten Position innerhalb der Behälterzelle 2 aufgenommen wird, derart, dass beispielsweise ein Spritzstrahl zum Ausspritzen des Behälters, welcher mittels einer Spritzdüse auf die Behältermündung gerichtet ist oder der Behältermündung nachgefahren wird, definiert durch die Mündung des Behälters hindurch in dessen Innenraum gelangen kann.

Aufgrund der Relativbewegung von Spritzdüse und Behältermündung durch den Transport des zu behandelnden Behälters durch die Behälterreinigungsmaschine hindurch ist eine genaue Positionierung der Behältermündung bezüglich der Behälterzelle 2 von Vorteil, um ein sicheres und zuverlässiges Ausspritzen des Innenraums des Behälters zu erreichen. Bei einer nicht definiert angeordneten Behältermündung, beispielsweise durch einen nicht vollständig eingeschobenen Behälter, kann ein solches Ausspritzen aufgrund der veränderten Winkelbereiche nicht sichergestellt werden beziehungsweise kann ein nachgeführter Spritzstrahl die Behältermündung sogar vollständig verfehlen.

In dem gezeigten Ausführungsbeispiel ist der Behälterzelleneinsatz 20, welcher ein Teil der Behälterzelle 2 ist, als Kunststoffeinsatz ausgebildet und ist mit einem Behälterzellenkörper 22 verbunden, beispielsweise teilweise in diesen eingeschoben. Der Behälterzellenkörper 22 ist bevorzugt im Wesentlichen aus Metall, beispielsweise einem Stahl oder Edelstahl, hergestellt und weist an seinem oberen Ende eine Öffnung 24 auf, welche dann teilweise durch den eingeschobenen Behälterzelleneinsatz 20 so verschlossen wird, dass ein in die Behälterzelle 2 eingeschobener und zu behandelnder Behälter nicht aus der Behälterzelle 2 und aus der Öffnung 24 heraus rutschen kann oder aus der Behälterzelle 2 herausfallen kann.

Der Behälterzelleneinsatz 20 ist entsprechend dazu ausgebildet, eine Begrenzung der Einschubtiefe eines zu behandelnden Behälters in der Behälterzelle 2 zu ermöglichen. Beim Durchlaufen einer hier nicht vollständig gezeigten Behälterreinigungsmaschine, beispielsweise einer Flaschenspülmaschine zum Spülen beziehungsweise Reinigen von Mehrwegflaschen in einer Getränkeabfüllanlage, ist es so möglich, die zu behandelnden Mehrwegflaschen auch kopfüber, also mit nach unten gerichteter Mündung, zu fördern, so dass die sich in den Mehrwegflaschen befindliche Flüssigkeit auslaufen kann. In dieser Position kann auch ein Ausspritzen der Innenräume der Mehrwegflaschen erfolgen. Ein Herausrutschen der Mehrwegflaschen aus den Behälterzellen 2 wird bei dieser Überkopfbehandlung dadurch vermieden, dass der Behälterzelleneinsatz 20 die Öffnung 24 des Behälterzellenkörpers 22 so weit reduziert, dass der jeweilige, zu behandelnde Behälter nicht herausrutscht, sondern in einer definierten Position gehalten wird.

Wie sich aus Figur 1 ergibt, ist der Behälterzelleneinsatz 20 weiterhin so ausgebildet, dass in seinem vorderen Bereich eine schlitzförmige Behandlungsöffnung 26 angeordnet ist, durch welche hindurch beispielsweise ein Ausspritzen des Mündungsbereiches eines in der Behälterzelle 2 aufgenommenen Behälters durchgeführt werden kann.

Eine Mehrzahl von Behälterzellen 2 ist in Behälterzellenreihen 200 nebeneinander aufgenommen. Die Behälterzellenreihen 200 sind senkrecht zur Transportrichtung X ausgerichtet. Eine Vielzahl von Behälterzellenreihen 200 ist in Transportrichtung X hintereinander angeordnet, so dass sich hier jeweils auch Behälterzellenspalten 210 ergeben.

Durch die Anordnung der Behälterzellen 2 in dieser Weise ist ein quasi kontinuierlicher Transport von zu reinigenden beziehungsweise zu behandelnden Behältern durch die Behälterreinigungsmaschine hindurch möglich.

Um sicherzustellen, dass die Behälterzellen 2 intakt sind, bevor ein neuer zu behandelnder Behälter in die jeweilige Behälterzelle 2 eingeschoben wird, ist eine Kontrollvorrichtung 3 vorgesehen, welche dazu dient, die Integrität jeder Behälterzelle 2 zu überprüfen. Insbesondere ist die Kontrollvorrichtung 3 dazu vorgesehen, zu überprüfen, ob tatsächlich ein Behälterzelleneinsatz 20 vorhanden ist, oder ob der Behälterzelleneinsatz 20 fehlt. Im Falle des Fehlens des Behälterzelleneinsatzes 20 würde nämlich ein zu behandelnder Behälter bei der Überkopfbehandlung entweder vollständig aus der Behälterzelle 2 herausrutschen, oder aber zumindest zu weit in die Behandlungsvorrichtung hereinragen, wodurch die Gefahr bestünde, beispielsweise Spritzdüsen zum Ausspritzen der zu behandelnden Behälter oder andere Maschinenkomponenten zu beschädigen, zu verstellen oder gar abzureißen. Entsprechend ist eine Kontrolle der Integrität der Behälterzellen 2 eine wichtige Maßnahme, um die Betriebssicherheit der Vorrichtung zur Reinigung von Behältern 1 sicherzustellen.

Die Kontrollvorrichtung 3 weist dabei einen Tastbereich 30 auf, welcher verschwenkbar gehalten ist und welcher aufgrund seines Eigengewichtes über die Behälterzellen 2 und insbesondere die Behälterzelleneinsätze 20 hinweg gleitet. Entsprechend würde in einem Fall, in welchem beispielsweise ein Behälterzelleneinsatz 20 fehlt, der Tastbereich 30 nicht mehr von dem darunter liegenden Behälterzelleneinsatz 20 getragen werden, sondern würde nach unten abkippen. Bei einem solchen Abkippen wird ein mit dem Tastbereich 30 verbundener Auslösebereich 32 bewegt, welcher im gezeigten Ausführungsbeispiel im Wesentlichen in einem rechten Winkel zum Tastbereich 30 angeordnet ist. Die Verschwenkachse 34, um welche herum der Tastbereich 30 verschwenkbar ist, ist im gezeigten Ausführungsbeispiel zwischen dem Tastbereich 30 und dem Auslösebereich 32 angeordnet. Daher bewegt sich der Auslösebereich 32 bei einem Abkippen des Tastbereiches 30 nach unten im gezeigten Ausführungsbeispiel in der Transportrichtung der Behälterzellen 2 entsprechend nach vorn. Bei der Vorwärtsbewegung des Auslösebereiches 32 wird dieser gegen ein Sensorseil 320 anschlagen und dieses auslenken, wodurch entsprechend ein Sensor 322, beispielsweise in Form eines Mikroschalters, betätigt wird.

In einer bevorzugten Weiterbildung kann auch anstelle oder zusätzlich zu der Auslenkung des Sensorseils 320 durch den Auslösebereich 32 der Kontrollvorrichtung 3 ein elektrischer Schaltkreis geschlossen werden. Hierzu liegen beispielsweise die Kontrollvorrichtungen 3 mit ihren Auslösebereichen 32 auf einem ersten Potential und das dann leitfähige Sensorseil 320 auf einem zweiten Potential. Bei Berührung des Sensorseils 320 durch den Auslösebereich 32 wird entsprechend ein Kontakt hergestellt, der beispielsweise durch das Fließen eines Stromes detektiert werden kann.

Anstelle des Sensorseils 320 kann beispielsweise auch eine Lichtschranke verwendet werden, welche durch das Verschwenken des Auslösebereiches 32 unterbrochen wird, wenn ein Behälterzelleneinsatz 20 fehlt und der Tastbereich 30 entsprechend nach unten abkippt. Auch auf diese Weise kann ein Sensorsignal erzeugt werden.

Neben der Kontrollvorrichtung 3 ist in der Vorrichtung 1 eine Fremdkörperausstoßvorrichtung 4 vorgesehen, mittels welcher sich in einer jeweiligen Behälterzelle 2 befindliche Fremdkörper aus der Behälterzelle 2 ausgestoßen werden können. Die Fremdkörperausstoßvorrichtung 4 weist dabei einen Ausstoßbereich 40 auf, welcher in die Behandlungsöffnung 26 des Behälterzelleneinsatzes 20 hereinragt und entsprechend auf sich in diesem Bereich befindliche Fremdkörper ausstoßend einwirkt. Der Ausstoßbereich 40 der Fremdkörperausstoßvorrichtung 4 dient dabei insbesondere dazu, etwaig verklemmte Behälter, welche sich noch in einer Behälterzelle 2 befinden, aus dieser Behälterzelle 2 herauszutreiben, beispielsweise durch das Aufbringen einer Kraft auf die jeweilige Behältermündung.

Weiterhin dient die Fremdkörperausstoßvorrichtung 4 dazu, möglicherweise in der Behälterzelle 2 und insbesondere im Bereich des Behälterzelleneinsatzes 20 verklemmte oder verkantete Scherben oder abgebrochene Mündungsbereiche, beispielsweise von zersprungenen Mehrwegflaschen, aus der Behälterzelle 2 herauszutreiben. Der Ausstoßbereich 40 der Fremdkörperausstoßvorrichtung 4 ist dabei so gegen die Transportrichtung X angeschrägt, dass beim Vorbeitransportieren der Behälterzelleneinsätze 20 eine entsprechende Keilwirkung auf sich potentiell in den Behälterzelleneinsätzen 20 befindliche Fremdkörper ausgeübt wird.

Auf diese Weise kann die Betriebssicherheit der Gesamtvorrichtung erhöht werden, da die Gefahr des Einschiebens eines neuen zu behandelnden Behälters in die Behälterzelle 2 trotz des Vorliegens eines Behälters oder eines anderen Fremdkörpers in der Behälterzelle 2 verringert werden kann. Entsprechend können Anlagenstörungen wie z. B. ein Behälterbruch vermieden werden und auch hierdurch die Betriebssicherheit beziehungsweise die Zuverlässigkeit der Behälterreinigung erhöht werden.

Die Fremdkörperausstoßvorrichtung 4 und die Kontrollvorrichtung 3 sind in einer gemeinsamen Baugruppe 5 zusammengefasst. Dabei weist die Fremdkörperausstoßvorrichtung 4 neben dem Ausstoßbereich 40 einen Träger 42 auf, mittels welchem der Ausstoßbereich 40 der Fremdkörperausstoßvorrichtung 4 an einem Trägerbalken 6 der Vorrichtung 1 gehalten ist. Der Träger 42 der Fremdkörperausstoßvorrichtung 4 dient gleichzeitig dazu, die Verschwenkachse 34 der Kontrollvorrichtung 3 zu halten.

Entsprechend kann über die Kontrollvorrichtung 3 auf eine einfache und zuverlässige Weise überprüft werden, ob die Behälterzellen 2 integer sind, oder ob beispielsweise der Behälterzelleneinsatz 20 fehlt. Wird ein solches Fehlen eines Behälterzelleneinsatzes 20 detektiert, so wird entweder die gesamte Behälterreinigungsmaschine angehalten, oder aber es wird darauf verzichtet, die entsprechende Behälterzellenreihe 200 mit neuen, zu reinigen Behältern zu bestücken und die Behälterzellenreihe 200 wird entsprechend gesperrt. Da in dem gezeigten Ausführungsbeispiel nur ein einziger Sensor in Form des Sensorseiles 320 in Verbindung mit dem Sensorschalter 322, beziehungsweise im Falle einer Lichtschranke entsprechend eines Lichtschrankensignals zur Detektion der fehlerhaften Integrität sämtlicher Kontrollvorrichtungen 3 dient, ist eine positionsgenaue (also spaltengenaue) Aussage darüber, welche der Behälterzellen 2 in einer Behälterzellenspalte 200 konkret nicht integer ist, nicht möglich. Es kann nur eine Aussage darüber getroffen werden, in welcher Behälterzellenreihe 200 mindestens eine Behälterzelle 2 nicht integer ist, so dass hier entsprechend ein Beschicken der ganzen Behälterzellenreihe ausfällt.

In einem weiteren bevorzugten, aber in der Figur nicht gezeigten Ausführungsbeispiel weist jedoch jede einzelne Kontrollvorrichtung 3 einen eigenen Sensor auf, so dass so eine behälterzellengenaue Detektion des Fehlens eines Behälterzelleneinsatzes 20 erreicht werden kann. Als Sensoren werden hier bevorzugt mechanische, optische und/oder magnetische Sensoren verwendet

Die Fremdkörperausstoßvorrichtung 4 ist über ihren Träger 42 im Wesentlichen starr an dem Trägerbalken 6 gehalten. Damit ergibt sich auch eine stabile und definierte Anbindung für die verschwenkbare Kontrollvorrichtung 3 an der Fremdkörperausstoßvorrichtung 4. Auf diese Weise wird es möglich, eine besonders kompakte Ausbildung der beiden funktionalen Einheiten, nämlich der Kontrollvorrichtung 3 und der Fremdkörperausstoßvorrichtung 4 zu erreichen.

Um im gezeigten Ausführungsbeispiel eine besonders kompakte Ausbildung zu erreichen, ist in dem Tastbereich 30 der Kontrollvorrichtung 3 ein Schlitz 36 vorgesehen, durch welchen hindurch sich der Ausstoßbereich 40 der Fremdkörperausstoßvorrichtung 4 nach unten hin erstreckt. Damit stehen die Fremdkörperausstoßvorrichtung 4 mit ihrem Ausstoßbereich 40 und der Tastbereich 30 symmetrisch zueinander und sind genau die Mittellinie der jeweiligen Behälterzelle 2 überdeckend ausgerichtet. Der Schlitz 36 ist so dimensioniert, dass ein problemloses Verschwenken der Kontrollvorrichtung 3 ermöglicht ist.

In einem Fall, in welchem ein besonders hartnäckiger Fremdkörper in der Behälterzelle 2 vorhanden ist, würde eine vollständig starre Halterung des Ausstoßbereiches 40 der Fremdkörperausstoßvorrichtung 4 entweder dazu führen, dass der Fremdkörper und damit die Behälterzelle 2 an der Fremdkörperausstoßvorrichtung 4 hängen bleibt, wodurch entweder die Transportvorrichtung mit den Behälterzellen 2 oder die Fremdkörperausstoßvorrichtung 4 beschädigt werden würde. Um Beschädigungen zu vermeiden, ist der Trägerbalken 6 um seine Rotationsachse Y herum rotierbar gehalten und mittels eines Elastomers 7 in die Ausstoßrichtung des Ausstoßbereiches 40 vorgespannt. Anstelle des Elastomers 7 kann auch eine Feder oder eine andere Vorspannvorrichtung vorgesehen sein, welche den Trägerbalken 6 entsprechend so vorspannt, dass die Fremdkörperausstoßvorrichtung 4 in Ausstoßrichtung vorgespannt ist. Damit kann beim Vorliegen eines besonders hartnäckig verklemmten Fremdkörpers in dem Behälterzelleneinsatz 20 der Ausstoßbereich 40, der über den Träger 42 mit dem Trägerbalken 6 verbunden ist, aufgrund der Rotierbarkeit des Trägerbalkens 6 nach oben hin ausgelenkt werden, so dass weder der Behälterzelleneinsatz 20, noch andere Teile der Vorrichtung beschädigt werden. Für diesen Fall ist jedoch besonders bevorzugt ein hier nicht gezeigter Sensor vorgesehen, welcher eine entsprechende Auslenkung des Trägerbalkens 6 detektiert und auch in diesem Fall ein Anhalten der Behälterreinigungsmaschine erzwingt, um eine direkte Überprüfung der Behälterzellenreihe 200 vornehmen zu können.

### Bezugszeichenliste

- 1: Vorrichtung zur Überwachung des Leerzustandes einer Behälterzelle
- 2: Behälterzelle
- 20: Behälterzelleneinsatz
- 22: Behälterzellenkörper
- 24: Öffnung des Behälterzellenkörpers
- 26: Behandlungsöffnung
- 200: Behälterzellenreihe
- 210: Behälterzellenspalte
- 3: Kontrollvorrichtung
- 30: Tastbereich
- 32: Auslösebereich
- 34: Verschwenkachse
- 36: Schlitz
- 320: Sensorseil
- 322: Sensor
- 4: Fremdkörperausstoßvorrichtung
- 40: Ausstoßbereich
- 42: Träger
- 5: Baugruppe
- 6: Trägerbalken
- 7: Elastomer

- X: Transportrichtung
- Y: Rotationsachse des Trägerbalkens

## Patentansprüche

1. Vorrichtung (1) zur Überwachung des Leerzustandes einer Behälterzelle (2) einer Behälterreinigungsmaschine, bevorzugt einer Behälterreinigungsmaschine zur Reinigung von Mehrwegflaschen in einer Getränkeabfüllanlage, umfassend mindestens eine Fremdkörperausstoßvorrichtung (4) zum Ausstoßen eines in einer Behälterzelle (2) vorliegenden Fremdkörpers aus der Behälterzelle (2),
**gekennzeichnet durch**
eine Kontrollvorrichtung (3), die einen Tastbereich (30) zum Abtasten der Behälterzelle (2) zur Ermittlung, ob ein Behälterzelleneinsatz (20) vorhanden ist, und einen Auslösebereich (32) zum Auslösen eines Sensors (322) aufweist.

2. Vorrichtung (1) gemäß Anspruch 1, **dadurch gekennzeichnet, dass** die Fremdkörperausstoßvorrichtung (4) und die Kontrollvorrichtung (3) eine gemeinsame Baugruppe (5) ausbilden.

3. Vorrichtung (1) gemäß einem der vorstehenden Ansprüche, **dadurch gekennzeichnet, dass** die Kontrollvorrichtung (3) mit einem Träger (42) der Fremdkörperausstoßvorrichtung (4) verbunden ist.

4. Vorrichtung (1) gemäß Anspruch 3, **dadurch gekennzeichnet, dass** eine Verschwenkachse (34) der Kontrollvorrichtung (3) an dem Träger (42) der Fremdkörperausstoßvorrichtung (4) angeordnet ist.

5. Vorrichtung (1) gemäß einem der vorstehenden Ansprüche, **dadurch gekennzeichnet, dass** die Kontrollvorrichtung (3) und die Fremdkörperausstoßvorrichtung (4) in Transportrichtung (X) der Behälterzelle (2) hintereinander angeordnet sind, wobei bevorzugt zunächst die Fremdkörperausstoßvorrichtung (4) und dann die Kontrollvorrichtung (3) mit der Behälterzelle (2) in Wechselwirkung tritt.

6. Vorrichtung (1) gemäß einem der vorhergehenden Ansprüche, **dadurch gekennzeichnet, dass** die Kontrollvorrichtung (3) um eine zwischen dem Tastbereich (30) und dem Auslösebereich (32) angeordnete Verschwenkachse (34) herum verschwenkbar an der Fremdkörperausstoßvorrichtung (4) gehalten ist.

7. Vorrichtung (1) gemäß einem der vorstehenden Ansprüche, **dadurch gekennzeichnet, dass** die Fremdkörperausstoßvorrichtung (4) einen Ausstoßbereich (40) und einen Träger (42) aufweist, wobei die Kontrollvorrichtung (3) am Träger (42) der Fremdkörperausstoßvorrichtung (4) angeordnet ist.

8. Vorrichtung (1) gemäß einem der vorstehenden Ansprüche, **dadurch gekennzeichnet, dass** die Fremdkörperausstoßvorrichtung (4) einen Ausstoßbereich (40) und einen starr mit diesem verbundenen Träger (42) aufweist und der Träger (42) in Ausstoßrichtung vorgespannt ist.

9. Vorrichtung (1) gemäß einem der vorstehenden Ansprüche, **dadurch gekennzeichnet, dass** die Baugruppe (5) aus Kontrollvorrichtung (3) und Fremdkörperausstoßvorrichtung (4) an einem sich quer zur Transportrichtung (X) der Behälterzelle (2) erstreckenden Trägerbalken (6) gehalten ist.

10. Vorrichtung (1) gemäß Anspruch 9, **dadurch gekennzeichnet, dass** entlang des Trägerbalkens (6) eine Mehrzahl von Baugruppen (5) angeordnet sind, bevorzugt je Behälterzellenspalte (210) eine Baugruppe (5).

11. Vorrichtung (1) gemäß Anspruch 9 oder 10, **dadurch gekennzeichnet, dass** der Trägerbalken (6) um eine sich senkrecht zur Transportrichtung (X) der Behälterzelle (2) erstreckende Verschwenkachse (Y) herum verschwenkbar ist und in Ausstoßrichtung der Fremdkörperausstoßvorrichtung (4) vorgespannt ist.

12. Vorrichtung (1) gemäß einem der Ansprüche 9 bis 11, **dadurch gekennzeichnet, dass** eine gemeinsame Sensorvorrichtung (320, 322) für mindestens zwei, bevorzugt für alle sich entlang des Trägerbalkens (6) erstreckenden Kontrollvorrichtungen (3) vorgesehen ist, wobei die Sensorvorrichtung bevorzugt als Sensorseil (320) für eine elektrische, elektronische oder mechanische Betätigung und/oder als Lichtschranke ausgebildet ist.

13. Behälterreinigungsmaschine für eine Getränkeabfüllanlage, bevorzugt zur Reinigung von Mehrwegflaschen, umfassend mindestens eine Vorrichtung (1) gemäß einem der vorstehenden Ansprüche.

14. Behälterreinigungsmaschine gemäß Anspruch 13, **dadurch gekennzeichnet, dass** mindestens eine Baugruppe (5) umfassend eine Kontrollvorrichtung (3) und eine Fremdkörperausstoßvorrichtung (4) an einem sich quer zur Transportrichtung (X) der Behälterzellen (2) erstreckenden Trägerbalken (6) gehalten ist und bevorzugt eine Mehrzahl von Baugruppen (5) an dem Trägerbalken angeordnet sind, besonders bevorzugt je Behälterzellenspalte (210) eine.

## Claims

1. Device (1) for monitoring the empty state of a container cell (2) of a container cleaning machine, preferably a container cleaning machine for cleaning returnable bottles in a bottling plant, comprising at least one foreign body ejecting device (4) for ejecting a foreign body present in a container cell (2) from said container cell (2), **characterised by** a control device (3) which comprises a scanning region (30) for scanning the container cell (2) in order to determine whether a container cell insert (20) is present, and an actuation region (32) for actuating a sensor (322).

2. Device (1) according to claim 1, **characterised in that** the foreign body ejecting device (4) and the control device (3) form a common assembly (5).

3. Device (1) according to one of the preceding claims, **characterised in that** the control device (3) is connected to a carrier (42) of the foreign body ejecting device (4).

4. Device (1) according to claim 3, **characterised in that** a swivel axis (34) of the control device (3) is arranged on the holder (42) of the foreign body ejecting device (4).

5. Device (1) according to one of the preceding claims, **characterised in that** the control device (3) and the foreign body ejecting device (4) are arranged one behind the other in the transport direction (X) of the container cell (2), wherein preferably first the foreign body ejecting device (4) and then the control device (3) interacts with the container cell (2).

6. Device (1) according to one of the preceding claims, **characterised in that** the control device (3) is held on the foreign body ejecting device (4) in such a way as to be able to swivel around a swivel axis (34) located between the scanning region (30) and the actuating region (32).

7. Device (1) according to one of the preceding claims, **characterised in that** the foreign body ejecting device (4) comprises an ejection region (40) and a carrier (42), wherein the control device (3) is arranged on the carrier (42) of the foreign body ejecting device (4).

8. Device (1) according to one of the preceding claims, **characterised in that** the foreign body ejecting device (4) comprises an ejection region (40) and a carrier (42) rigidly attached thereto, and the carrier (42) is biased in the ejection direction.

9. Device (1) according to one of the preceding claims, **characterised in that** the assembly (5) consisting of the control device (3) and the foreign body ejecting device (4) is held on a carrier bar (6) extending transversely to the transport direction (X) of the container cell (2).

10. Device (1) according to claim 9, **characterised in that** a plurality of assemblies (5) is arranged along the carrier bar (6), preferably with one assembly (5) per container cell column (210).

11. Device (1) according to claim 9 or 10, **characterised in that** the carrier bar (6) can be swivelled around a swivel axis (Y) extending perpendicular to the transport direction (X) of the container cell (2) and is biased in the ejection direction of the foreign body ejecting device (4).

12. Device (1) according to one of claims 9 to 11, **characterised in that** a common sensor device (320, 322) is provided for at least two, preferably for all, control devices (3) extending along the carrier bar (6), wherein the sensor device is preferably configured as a sensor line (320) for electrical, electronic or mechanical actuation and/or as a light barrier.

13. Container cleaning machine for a bottling plant, preferably for cleaning returnable bottles, comprising at least one device (1) according to the preceding claims.

14. Container cleaning machine according to claim 13, **characterised in that** at least one assembly (5) comprising a control device (3) and a foreign body ejecting device (4) is held on a carrier bar (6) extending transversely to a transport direction (X) of the container cells (2) and preferably a plurality of assemblies (5) is arranged on the carrier bar, particularly preferably one for each container cell column (210).

## Revendications

1. Dispositif (1) de surveillance de l'état vide d'une cellule de récipient (2) d'une machine de nettoyage de récipients, de préférence d'une machine de nettoyage de récipients pour le nettoyage de bouteilles consignées dans une installation de mise en bouteilles, comprenant au moins un dispositif d'éjection de corps étrangers (4) pour éjecter un corps étranger présent dans une cellule de récipient (2) de la cellule de récipient (2),
**caractérisé par** :
un dispositif de contrôle (3), qui présente une zone de palpage (30) pour palper la cellule de récipient (2) afin de déterminer si un insert de cellule de récipient (20) est présent et une zone de déclenchement (32) pour déclencher un capteur (322).

2. Dispositif (1) selon la revendication 1, **caractérisé en ce que** le dispositif d'éjection de corps étrangers (4) et le dispositif de contrôle (3) forment un bloc commun (5).

3. Dispositif (1) selon l'une quelconque des revendications précédentes, **caractérisé en ce que** le dispositif de contrôle (3) est raccordé à un support (42) du dispositif d'éjection de corps étrangers (4).

4. Dispositif (1) selon la revendication 3, **caractérisé en ce qu'**un axe pivot (34) du dispositif de contrôle (3) est aménagé sur le support (42) du dispositif d'éjection de corps étrangers (4).

5. Dispositif (1) selon l'une quelconque des revendications précédentes, **caractérisé en ce que** le dispositif de contrôle (3) et le dispositif d'éjection de corps étrangers (4) sont aménagés l'un derrière l'autre dans la direction de transport (X) de la cellule de récipient (2), dans lequel, de préférence, tout d'abord le dispositif d'éjection de corps étrangers (4), puis le dispositif de contrôle (3) entrent en interaction avec la cellule de récipient (2).

6. Dispositif (1) selon l'une quelconque des revendications précédentes, **caractérisé en ce que** le dispositif de contrôle (3) est supporté sur le dispositif d'éjection de corps étrangers (4) de façon à pouvoir tourner autour d'un axe pivot (34) aménagé entre la zone de palpage (30) et la zone de déclenchement (32).

7. Dispositif (1) selon l'une quelconque des revendications précédentes, **caractérisé en ce que** le dispositif d'éjection de corps étrangers (4) présente une zone d'éjection (40) et un support (42), dans lequel le dispositif de contrôle (3) est aménagé sur le support (42) du dispositif d'éjection de corps étrangers (4).

8. Dispositif (1) selon l'une quelconque des revendications précédentes, **caractérisé en ce que** le dispositif d'éjection de corps étrangers (4) présente une zone d'éjection (40) et un support (42) qui est lié à celle-ci de manière rigide et le support (42) est pré-sollicité dans la direction d'éjection.

9. Dispositif (1) selon l'une quelconque des revendications précédentes, **caractérisé en ce que** le bloc (5) constitué du dispositif de contrôle (3) et du dispositif d'éjection de corps étrangers (4) est supporté dans une poutre de support (6) s'étendant transversalement à la direction de transport (X) de la cellule de récipient (2).

10. Dispositif (1) selon la revendication 9, **caractérisé en ce qu'**une pluralité de blocs (5) sont aménagés le long de la poutre de support (6), de préférence un bloc (5) par colonne de cellules de récipients (210).

11. Dispositif (1) selon la revendication 9 ou 10, **caractérisé en ce que** la poutre de support (6) peut pivoter autour d'un axe pivot (Y) d'étendant perpendiculairement à la direction de transport (X) de la cellule de récipient (2) et est pré-sollicitée dans la direction d'éjection du dispositif d'éjection de corps étrangers (4).

12. Dispositif (1) selon l'une quelconque des revendications 9 à 11, **caractérisé en ce qu'**un dispositif de détection commun (320, 322) est prévu pour au moins deux, de préférence pour tous les dispositifs de contrôle (3) s'étendant le long de la poutre de support (6), dans lequel le dispositif de détection est conçu de préférence comme câble de capteur (320) pour une commande électrique, électronique ou mécanique et/ou comme barrière lumineuse.

13. Machine de nettoyage de récipients pour une installation de mise en bouteilles, de préférence pour le nettoyage de bouteilles consignées, comprenant au moins un dispositif (1) selon l'une quelconque des revendications précédentes.

14. Machine de nettoyage de récipients selon la revendication 13, **caractérisée en ce qu'**au moins un bloc (5) comprenant un dispositif de contrôle (3) et un dispositif d'éjection de corps étrangers (4) est supporté sur une poutre de support (6) s'étendant transversalement à la direction de transport (X) des cellules de récipients (2) et, de préférence, une pluralité de blocs (5) sont aménagés sur la poutre de support, de manière particulièrement préférée un bloc par colonne de cellules de récipients (210).
